# EUROPÄISCHE PATENTSCHRIFT

(11) **EP 2 153 334 B1**
(45) Veröffentlichungstag und Bekanntmachung des Hinweises auf die Patenterteilung: **13.07.2011**
(21) Anmeldenummer: 08750143.3
(22) Anmeldetag: 07.05.2008
(51) Int. Cl.: G06F 13/42

(54) **DATENÜBERTRAGUNGSVERFAHREN ZWISCHEN MASTER- UND SLAVE-EINRICHTUNGEN**
DATA TRANSMISSION METHOD BETWEEN MASTER AND SLAVE DEVICES
PROCÉDÉ POUR TRANSMETTRE DES DONNÉES ENTRE DES DISPOSITIFS MAÎTRES ET ESCLAVES

(30) Priorität: 25.05.2007 DE 102007024737
(43) Veröffentlichungstag der Anmeldung: 17.02.2010
(73) Patentinhaber: Robert Bosch GmbH, 70442 Stuttgart (DE)
(72) Erfinder: GOERLICH, Patrick, 72770 Reutlingen (DE); SEEMANN, Sabine, 73760 Ostfildern (DE); ESCH, Ermin, 72124 Pliezhausen (DE)
(86) Internationale Anmeldenummer: PCT/EP2008/055623
(87) Internationale Veröffentlichungsnummer: WO 2008/145494

(56) Entgegenhaltungen:
- DE-A1- 10 109 369
- US-A- 5 835 785

## Beschreibung

Die vorliegende Erfindung betrifft ein Verfahren zum Übertragen von Datenrahmen zwischen einer Master-Einrichtung und mehreren Slave-Einrichtungen, ein Computerprogrammprodukt, welches die Durchführung eines entsprechenden Verfahrens auf einer oder mehreren programmgesteuerten Master- und/oder Slave-Einrichtungen veranlasst, und ein Kommunikationsnetzwerk mit Master- und Slave-Einrichtungen, welches zur Durchführung des Verfahrens geeignet ist.

### STAND DER TECHNIK

Bei der Datenübertragung zwischen zentralen Steuereinheiten, wie z. B. als Master-Einrichtung eingesetzte Mikrocontroller und Peripheriebausteinen, wie z. B. als Slave-Einrichtungen eingesetzte Sensoren, werden häufig serielle Bussysteme verwendet. In Kraftfahrzeugen wird beispielsweise häufig der SPI (Serial Peripheral Interface)-Bus eingesetzt. Dabei wird an einer Leitung ein serielles Taktsignal von dem Mikrocontroller an die angeschlossenen Sensoren geliefert. Es ist eine Datenleitung für den Datentransfer von dem Mikrocontroller zu den Sensoren vorgesehen (MOSI = Master Out Slave In), eine Datenleitung für den Datentransfer von den Sensoren zu dem Mikrocontroller (MISO = Master In Slave Out) und eine Auswahlleitung zum Selektieren von einem oder mehreren angeschlossenen Sensoren (CSB = Chip Select). Für dieses auf vier Leitungen basierende Bussystem sind verschiedene Datenprotokolle bekannt.

Es wurde z. B. vorgeschlagen, weitere Auswahlleitungen bzw. Chip Select-Leitungen entsprechend der Anzahl der vorliegenden Peripherieeinrichtungen vorzusehen, was an dem jeweiligen Mikrocontroller mehrere Selektports bedingt. Dies ermöglicht, dass in einem Selekt- oder Auswahlzyklus, der durch einen vorgegebenen Pegel des Auswahlsignals definiert ist, sowohl Anfragedatenraten und die entsprechenden Antwortdatenrahmen über die MOSI- bzw. MISO-Leitung gesendet werden können, wenn Anfrage und Antwort darauf innerhalb von einem Selektzyklus stattfinden. Allerdings können die ersten, also höchstwertigen Bits der Antwort nicht anfragenspezifisch belegt werden, da die selektierte Slave-Einrichtung bzw. Peripherie-Einrichtung zunächst den Anfragedatenrahmen zumindest teilweise auswerten muss. Somit werden nicht alle Bits der Datenrahmen effizient genutzt.

Ein ähnliches Problem tritt auf, wenn nur eine einzelne Auswahlleitung vorgesehen wird und die Auswahl des selektierten Peripherie-Bausteins durch Adressbits in dem Anfragedatenrahmen, der über die MOSI-Leitung gesendet wird, definiert ist. Wenn sowohl der Anfragedatenrahmen wie auch der entsprechende Antwortdatenrahmen in demselben Selektionszyklus versendet werden, können die ersten Bits des jeweiligen Antwortdatenrahmens nicht anfragespezifisch belegt werden. Es wurde darüber hinaus vorgeschlagen, die Anfrage- und Antwortdatenrahmen in unterschiedlichen Auswahlzyklen zu senden. Damit findet eine zeitliche Entzerrung zwischen einer Anfrage von dem Mikrocontroller und der entsprechenden Antwort durch die ausgewählte Slave-Einrichtung oder Peripherie-Einrichtung statt. Zwar kann dann der vollständige Datenrahmen zur Übertragung von anfragespezifischen Bits verwendet werden, allerdings ergibt sich eine Halbierung des Datendurchsatzes, wenn jeder Sensor an einer Chipselektleitung angeschlossen ist, wie es zum Beispiel bei dem sogenannten Autoliv-Protokoll der Fall ist.

Die US 5,835,785 beschreibt einen synchronen / asynchronen Multiplex-Datenbus mit drei Kommunikationsverbindungen für bidirektionale synchrone Datenübertragung zwischen zwei Datenvorrichtungen. Aus der DE 101 09 369 A1 ist ein serielles Bussystem bekannt. Dabei können vom Busprotokoll unabhängige Daten durch einen Busteilnehmer an einen Empfänger übertragen werden, nachdem ein Datenpaketkopf, der jeweils eine 16 Bit lange Empfänger- und Absenderadresse beinhaltet, übertragen wurde und eine entsprechende Enable-Leitung auf logisch eins steht.

Es ist eine Aufgabe der vorliegenden Erfindung, ein verbessertes Verfahren zur Datenübertragung zwischen Master- und Slave-Einrichtungen zu schaffen.

### OFFENBARUNG DER ERFINDUNG

Die Erfindung geht dazu aus von einem Verfahren zur Übertragung von Datenrahmen zwischen einer Master-Einrichtung und einer oder mehreren Slave-Einrichtungen über ein Bussystem gemäß den unabhängigen Ansprüchen.

Das Bussystem weist mindestens eine Anfrageleitung zur Übertragung von Anfragedatenrahmen von der Master-Einrichtung an die Slave-Einrichtung, eine Antwortleitungen zur Übertragung von Antwortdatenrahmen von den Slave-Einrichtungen zu der Master-Einrichtung und mindestens eine Auswahlleitung zum Aktivieren der Slave-Einrichtungen auf. Dabei werden die Anfrage- und Antwortdatenrahmen mit mindestens einem Adressbit zum Adressieren einer der Slave-Einrichtungen, mit Nutzdatenbits und mit mindestens einem Längenanzeigebit zum Anzeigen der Datenrahmenlänge übertragen.

Unter einer Master-Einrichtung kann z. B. ein Mikrocontroller oder eine zentrale Recheneinheit zur Auswertung von Sensordaten verstanden werden. Als Slave-Einrichtungen kommen PeripherieEinrichtungen, Sensoreinrichtungen oder weitere steuerbare Einrichtungen in Frage. Die Anfragedatenrahmen und die Antwortdatenrahmen werden vorzugsweise synchron miteinander übertragen. Es ist z. B. denkbar, dass jeweils direkt auf einen Anfragedatenrahmen folgend ein zugehöriger Antwortdatenrahmen übertragen wird, wobei zwei verschiedene Auswahlzyklen betroffen sind. Das jeweilige Übertragen eines Anfrage- und Antwortdatenrahmens wird z. B. durch Ändern des Pegels eines Auswahlsignals auf der Auswahlleitung gestartet. Dabei kann das Auswahlsignal für die Dauer der Übertragung der Anfrage- und/oder Antwortdatenrahmen auf einen vorgegebenen logischen Pegel gesetzt werden. Vorzugsweise wird auf einen Anfragedatenrahmen folgend ein Antwortdatenrahmen mit denselben Adressbits von der adressierten Slave-Einrichtung gesendet.

Die Erfindung ermöglicht insbesondere, dass in Abhängigkeit von den Nutzdatenbits eines Anfragedatenrahmens von der adressierten Slave-Einrichtung ein langer, zum Beispiel mit 32 Bit, Antwortdatenrahmen gesendet wird. Dies kann z. B. notwendig sein, wenn ein Mikrocontroller als Master-Einrichtung von einem Sensor als Slave-Einrichtung besonders umfangreiche Daten abfragt. Es ist dann auch möglich, dass in Abhängigkeit von den Nutzdatenbits eines Anfragedatenrahmens ein darauffolgender um Zusatzbits verlängerter Anfragedatenrahmen übertragen wird. In den Nutzdatenbits sind z. B. Befehle, die die Abfrage von Sensordaten betreffen, eingeschrieben. Da die Master-Einrichtung einen verlängerten Antwortdatenrahmen erwartet, wird, um die Synchronizität des Datentransfers nicht zu stören, auch ein folgender verlängerter Anfragedatenrahmen gesendet, der zeitgleich mit dem verlängerten Antwortdatenrahmen parallel übertragen wird. Es kann auch ein verlängerter Antwortdatenrahmen notwendig sein, wenn ein längerer Anfragedatenrahmen zeitgleich, z. B. mit einem Schreibbefehl und zu schreibenden Daten gesendet wird.

Die Zusatzbits eines verlängerten Anfragerahmens weisen vorzugsweise Prüfbits, insbesondere für eine zyklische Redundanzprüfung, auf, und die Längenanzeigebits zeigen die Länge des verlängerten Anfragerahmens an. Die zyklische Redundanzprüfung ist ein Verfahren zur Bestimmung eines Prüfwertes für zu übertragende Daten, um Fehler bei der Übertragung der Daten erkennen zu können.

Wenn ein verlängerter Anfragedatenrahmen gesendet wird, zeigen die Längeanzeigebits eines synchron gesendeten Antwortdatenrahmens die unveränderte Länge des Antwortdatenrahmens an. Solange durch die Master-Einrichtung gesteuert das Auswahlsignal die betroffene Slave-Einrichtung anspricht sendet diese Bits, sodass ein verlängerter Antwortdatenrahmen entsteht.

In einer Variante des Verfahrens weist ein jeweiliger Datenrahmen ein Paritätsbit oder Prüfbit für eine zyklische Redundanzüberprüfung in Abhängigkeit von Längenanzeigebits auf. Somit ist es z. B. möglich, zwischen verschiedenen Datenrahmenlängen, z. B. von 16 auf 32 Bits umzuschalten, wobei als zusätzliches Sicherheitsmerkmal der längeren Datenrahmen eine zyklische Redundanzprüfung erfolgt.

Vorzugsweise werden die Adressbits als höchstwertige Bits eines jeweiligen Datenrahmens übertragen. Damit ist gewährleistet, dass die Adresse des adressierten Slaves schnellstmöglich erkannt wird. Vorteilhafterweise wird ferner ein Schreiblesebit an einer vorbestimmten Bitposition in den Anfragedatenrahmen und ein Statusbit an derselben Bitposition in den Antwortdatenrahmen übertragen. Die Dekodierung der Nutzdaten, beispielsweise Befehle, wird dadurch bei der Slave-Einrichtung erleichtert. Ferner kann das Statusbit Aufschluss über Fehler im Datentransfer oder bei den Slave-Einrichtungen liefern. Vorzugsweise werden die Bitpositionen der Adressbits, der Nutzdatenbits, der Längenanzeigebits, der Schreiblesebits, der Statusbits, der Paritätsbits und/oder der Prüfbits für alle Datenrahmen gleich festgelegt.

Die Erfindung liefert ferner ein Kommunikationsnetzwerk mit mindestens einer Master-Einrichtung und mehreren Slave-Einrichtungen, welche an ein Bussystem gekoppelt sind, wobei die Master- und Slave-Einrichtungen derart ausgestaltet sind, dass ein entsprechendes Verfahren zur Übertragung von Datenrahmen durchgeführt wird. Das Bussystem kann beispielsweise als SPI-Bus ausgeführt werden.

Weitere vorteilhafte Ausgestaltungen der Erfindung sind Gegenstand der Unteransprüche sowie der im Folgenden beschriebenen Ausführungsbeispiele.

### KURZE BESCHREIBUNG DER ZEICHNUNGEN

Im Folgenden wird die Erfindung anhand bevorzugter Ausführungsbeispiele unter Bezugnahme auf die beigelegten Figuren näher erläutert. Es zeigt dabei:
- Fig. 1:: eine Ausführungsform eines Kommunikationsnetzwerks zur Ausführung eines erfindungsge- mäßen Datenübernagungsverfahrens;
- Fig. 2:: eine beispielhafte Datenrahmenstruktur,
- Fig. 3:: einen zeitlichen Ablauf von Anfrage- und Antwortdatenrahmen;
- Fig. 4:: ein Ausführungsbeispiel für 16-Bit und auf 32 Bit verlängerte Datenrahmen;
- Fig. 5:: ein Ausführungsbeispiel für 32-Bit-Datenrahmen; und
- Fig. 6:: eine Darstellung von Verfahrensschritten in einer Master- und Slave-Einrichtung.

In den Figuren sind, sofern nichts anderes angegeben ist, gleiche bzw. funktionsgleiche Elemente mit denselben Bezugszeichen versehen worden.

### AUSFÜHRUNGSFORMEN DER ERFINDUNG

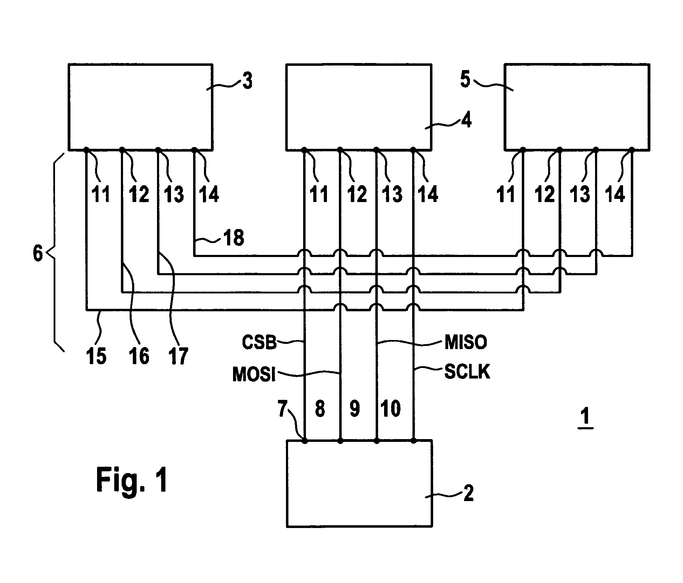

Die Fig. 1 zeigt ein Kommunikationsnetzwerk 1 mit einer Master-Einrichtung 2 und mehreren Slave-Einrichtungen 3, 4, 5. Die Master-Einrichtung 2 kann beispielsweise als Mikrocontroller ausgeführt werden. Die Stave-Einrichtungen 3, 4, 5 können beispielsweise als anwendungsangepasste Schaltungen ASICs (Application Specific Integrated Circuits) mit Sensorelementen ausgeführt werden. Es ist z. B. möglich, dass die Slave-Einrichtungen 3, 4, 5 als Sensoren ausgestaltet sind. Denkbar ist beispielsweise, in einem Kraftfahrzeug die Steuerung eines elektronischen Stabilisierungssystems (ESP) durch einen Mikrocontroller 2 in Abhängigkeit von Drehratendaten bezüglich verschiedener Fahrzeugachsen, Beschleunigungs-, Drehzahl- und/oder Lenkwinkeldaten, welche von entsprechenden Sensoren 3, 4, 5 geliefert werden. Im Folgenden werden die Begriffe "Master-Einrichtung" und "Mikrocontroller" sowie "Slave-Einrichtung", "Sensor", "Sensoreinrichtung und Peripherie-Einrichtung" synonym verwendet.

Die Sensoren 3, 4, 5 sind über ein Bussystem 6, welches beispielsweise als SPI-Bus ausgeführt ist, mit der Master-Einrichtung 2 gekoppelt. Das Bussystem 6 weist dabei eine Auswahlleitung oder Chip-Select-Leitung 15, eine Anfrageleitung oder MOSI-Leitung 16, eine Antwortleitung oder MISO-Leitung 17 und eine Taktleitung 18 für ein Taktsignal SCLK auf. Die Master-Einrichtung 2 erzeugt das Clock-Signal SCLK an ihrem Ausgang 10, welches über die Taktleitung 18 an entsprechende Eingangsanschlüsse 14 der Slave-Einrichtungen 3, 4, 5 geführt ist. Die Master-Einrichtung 2 erzeugt an einem Ausgang 7 das Chip-Select-Signal CSB, welches über die Auswahlleitung 15 an entsprechende Eingänge 11 der Slave-Einrichtungen 3, 4, 5 geführt ist. In der Regel ist das Chip-Select-Signal low-aktiv, d. h. die Slave-Einrichtungen 3, 4, 5 werden bei einem logischen L-Pegel des Chip-Select-Signals aktiviert und erwarten auf der Anfrageleitung 16, welche an entsprechende Anschlüsse 12 gekoppelt ist, Anfragedaten. Eine entsprechende ausgewählte Slave-Einrichtung 3, 4, 5 liefert dann über einen entsprechenden Ausgang 13 einen Antwortdatenrahmen auf die Antwortleitung 17, welche an einen entsprechenden Eingang 9 der Master-Einrichtung geführt ist.

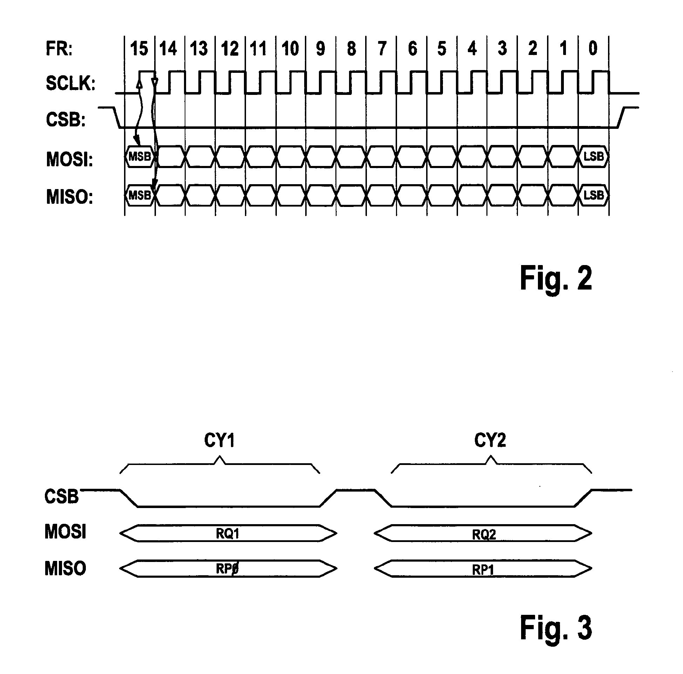

In der Fig. 2 ist ein typischer 16-Bit-Datenrahmen schematisch dargestellt. Dabei ist in der Zeile FR eine Nummerierung der Bits eines Anfragedatenrahmens MOSI und eines Antwortdatenrahmens MISO, die in den unteren beiden Zeilen angedeutet sind, dargestellt. Die Bits der Datenrahmen werden mit dem Taktsignal SCLK auf die entsprechende Antwort- bzw. Anfragedatenleitung gelegt. Das low-aktive Chip-Select-Signal ist mit CSB bezeichnet. Durch die beiden getrennten Anfrage- und Antwortdatenleitungen 16, 17 ist es möglich, gleichzeitig synchron einen beispielsweise einen 16-Bit umfassenden Anfragedatenrahmen und einen Antwortdatenrahmen zu übertragen.

Das Auswahlsignal bzw. das Chip-Select-Signal CSB aktiviert jedoch bei einer Ausführung mit nur einer Auswahlleitung 15 alle daran angeschlossenen Slave-Einrichtungen 3, 4, 5 gleichzeitig. Es wird daher erfindungsgemäß eine Adressierung und damit eine Auswahl der jeweiligen angefragten Slave-Einrichtung durch Einfügen von Adressbits in die Anfragedatenrahmen vorgenommen. Die Erfindung sieht dabei ferner vor, dass in einem Selektionszyklus, der durch das auf L-Pegel liegende Chip-Select-Signal CSB definiert wird, nicht gleichzeitig Anfragedatenrahmen für eine ausgewählte Slave-Einrichtung und deren Antwortdatenrahmen übertragen werden. Es ist vielmehr vorgesehen, wie es in der Fig. 3 näher erläutert ist, den zugehörigen Antwortdatenrahmen RP1 zu einem Anfragedatenrahmen RQ1 in dem unmittelbar darauf folgenden Selektionszyklus zu senden. Bei einem Aufbau, wie er in der Fig. 1 angedeutet ist, wird beispielsweise in einem Selektionszyklus CY1 ein erster Anfragedatenrahmen RQ1 von der Master-Einrichtung 2 über die MOSI-Leitung an die Slave-Einrichtung 3, 4, 5 gesendet. Dabei umfasst der Anfragedatenrahmen Adressbits, die eine der Slave-Einrichtungen adressiert. Im darauffolgenden Selektionszyklus CY2 übersendet die im ersten Anfragedatenrahmen RQ1 durch die Adressbits bezeichnete Slave-Einrichtung einen entsprechenden Antwort-Datenrahmen RP1 über die MISO-Leitung. Damit ist sichergestellt, dass der vollständige Datenrahmen für Nutzdaten bereitsteht, da die im ersten Anfragedatenrahmen RQ1 adressierte Slave-Einrichtung genügend Zeit zur Decodierung des entsprechenden Anfragebefehls im Anfragedatenrahmen RQ1 hat. Sowohl die Anfragedatenrahmen RQ1, RQ2, welche über die MOSI-Leitung 16 gesendet werden als auch die Antwortdatenrahmen RP0, RP1, welche über die MISO-Leitung 17 von den Slave-Einrichtungen gesendet werden, haben dieselbe Struktur. Allerdings weisen die Anfragdatenrahmen an einer vorgegebenen Bitposition jeweils ein Schreiblesebit auf, während die Antwortdatenrahmen an dieser Bitposition ein Statusbit haben. Diese ist in Folgenden näher erläutert.

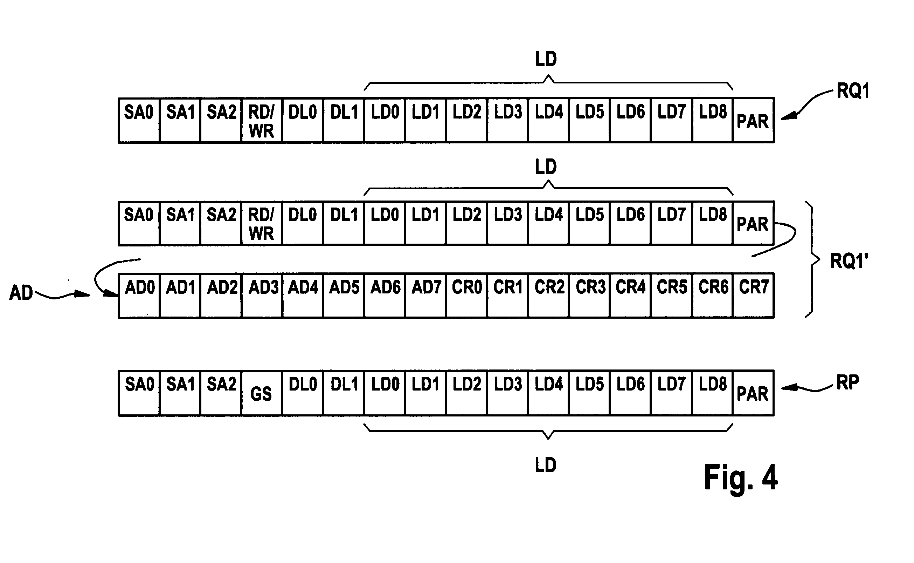

In der Fig. 4 sind beispielhafte 16-Bit-Datenrahmen dargestellt. Dabei ist zunächst ein Anfragedatenrahmen RQ1 mit 16 Bit Länge dargestellt. Dabei ist das höchstwertige Bit links und das niedrigstwertige Bit in der Fig. 4 rechts dargestellt. Die ersten drei Bits, also hochwertige Bits, des Anfragedatenrahmens sind mit Adressbits SA0, SA1, SA2 belegt. Diese Adressbits legen fest, welche der Slave-Einrichtungen 3, 4, 5 von der Master-Einrichtung 2 angefragt wird. An der vierthöchsten Stelle im Anfragedatenrahmen RQ1 ist ein Schreiblesebit RD/WR vorgesehen, welches der adressierten Slave-Einrichtung 3, 4, 5 signalisiert, ob ein Schreib- oder Lesebefehl folgt. Dies erleichtert die Decodierung des jeweiligen übertragenen Befehls. An fünft- und sechsthöchster Stelle sind zwei Längenanzeigebits DL0, DL1 vorgesehen, die die Länge des Anfragedatenrahmens RQ1 spezifizieren. Bei zwei Längenanzeigebits ist beispielsweise eine Codierung denkbar, bei der 00 für 16-Bit-Anfragedatenrahmen steht, 01 für 32-Bit-Rahmenlängen, 10 für 48 Bit und 11 für 64-Bit-Datenrahmen. Auch andere Zuordnungen sind dabei möglich. Zwischen dem niedrigstwertigen Bit, welches als Paritätsbit PAR ausgeführt ist, sind neun Bit Nutzdaten LD0-LD8 vorgesehen. Die Nutzdaten LD0-LD8 in der Anfrage sind in der Regel Befehle für die durch die Adressbits SA0, SA1, SA2 adressierte Slave-Einrichtung. Die Nutzdaten LD0-LD8 in der Antwort RP sind die Sensordaten, welche der Sensor zurück an den Mikrokontroller sendet.

In der Fig. 4 ist mit RP ein entsprechender darauffolgender von der adressierten Slave-Einrichtung 3, 4, 5 gesendeter Antwortdatenrahmen bezeichnet. Dieser hat dieselbe Struktur wie der in dem vorhergehenden Selektionszyklus gesendete Anfragedatenrahmen RQ1. Die ersten bzw. höchsten drei Bits sind mit Adressbits SA0, SA1, SA2 belegt, die der Adresse des sendenden Slaves 3, 4, 5 entsprechen. Anstelle eines Schreiblesebits ist an der vierthöchsten Bitposition ein Statusbit GS vorgesehen. Wenn die Slave-Einrichtung 3, 4, 5 eine fehlerhafte Datenübertragung, z. B. des vorangegangenen Anfragedatenrahmens RQ1 erkannt hat, kann sie dies über ein entsprechendes Zustandsbit GS melden. Das niedrigstwertige Bit ist wiederum ein Paritätsbit PAR, wobei zwischen den Bitpositionen des Zustandsbits GS und des Paritätsbits PAR die Nutzdatenbits LD0-LD8, beispielsweise Sensordaten vorgesehen sind.

In der Fig. 4 ist ferner ein verlängerter Anfragedatenrahmen RQ1' dargestellt, der 32 Bit umfasst. Es ist möglich, dass durch eine Anfrage der Master- Einrichtung 2 an eine Slave-Einrichtung 3, 4, 5 mehr Nutzdatenbits gewünscht sind. Die Slave-Einrichtung 2 kann z. B. über einen entsprechenden Befehl in den Nutzdaten LD des Anfragedatenrahmens die adressierte Slave-Einrichtung 3, 4, 5 veranlassen, einen 32-Bit-Datenrahmen mit achtzehn oder mehr Nutzdatenbits LD in einem Antwortdatenrahmen zurückzusenden. Um die Synchronizität der Datenübertragung über den entsprechenden SPI-Bus zu gewährleisten, muss dann während des längeren Antwortdatenrahmens der gleichzeitig gesendete folgende Anfragedatenrahmen RQ1' verlängert werden. Der verlängerte Anfragedatenrahmen RQ1' weist zunächst in den ersten 16 Bits eine übliche Datenstruktur auf, dann Zusatzbits AD0-AD7 und acht Prüfbits CR0-CR7 als Prüfbits für eine zyklische Redundanzprüfung. Die Verlängerung um 16 Bits wird in den Längenanzeigebits DL0, DL1 des verlängerten Anfragedatenrahmens RQ1' berücksichtigt. Es kann z. B. eine Verlängerung von Datenrahmen in 16-Bit-Inkrementen vorgesehen sein. Damit ergeben sich bei zwei Längenanzeigebits Datenrahmen mit 16, 32, 48 oder 64 Bit-Länge. Durch die Längenanzeigebits kann die Anzahl der Nutzdatenbits LD in dem jeweiligen Datenrahmen angezeigt werden oder aber auch die vollständige Länge des Datenrahmens inklusive der Adressbits SA0, SA1, SA2, Zustandsbits GS bzw. Schreiblesebits RD/WR, Längenanzeigebits DL0, DL1, Prüfbits PAR, CR0-CR7 und Nutzdatenbits LD.

Falls eine Master-Einrichtung 2 einen verlängerten Anfragedatenrahmen RQ1' sendet, empfängt sie parallel dennoch einen gültigen Antwortdatenrahmen von der Struktur und Länge, wie es in der Fig. 4 mit RP bezeichnet ist. Die Längenanzeigebits DL0, DL1 zeigen nach wie vor 16-Bit-Datenrahmenlängen an. Weitere zusätzliche Bits für die Dauer der Übertragung des parallel gesendeten verlängerten Anfragedatenrahmens RQ1' werden von der Slave-Einrichtung solange angehängt wie das Auswahlsignal CSB die Slave-Einrichtung ansteuert. Damit ermöglich die Erfindung ein einfaches Umschalten zwischen verschiedenen Datenrahmenlängen, die beispielsweise durch die Art der Nutzdaten bzw. der dort eingebetteten Befehle für die Slave-Einrichtungen 3, 4, 5 oder an die Master- Einrichtung 2 zurückgesandten Sensordaten bedingt sind.

Es kann festgelegt werden, dass ab einer Datenrahmenlänge von mehr als 16 Bits abweichend von einem einfachen Paritätscheck Prüfbits für eine 8-Bit-zyklische Redundanzprüfung als niedrigstwertige Bits eingefügt werden. Bei einer einfachen zyklischen Redundanzprüfung CRC (Cyclic Redundancy Check) werden die zu übertragenden Daten als dyadische Polynomialkoeffizienten betrachtet und das entsprechende Polynom mit einem vorgegebenen Generatorpolynom modulo dividiert. Der sich ergebender Modulorest ergibt dann die CRC-Prüfbits. Um zu verifizieren, dass die übertragenen Daten, also die Nutzdaten, keinen Fehler aufweisen, werden die empfangenen Nutzdaten mit den zugefügten CRC-Prüfbits als Binärfolge interpretiert und erneut durch das festgelegte CRC-Polynom modulogeteilt. Falls sich kein Modulorest ergibt, werden die übertragenen Nutzdaten als fehlerlos betrachtet. Es sind dabei auch weitere aufwändigere zyklische Redundanzprüfungen denkbar.

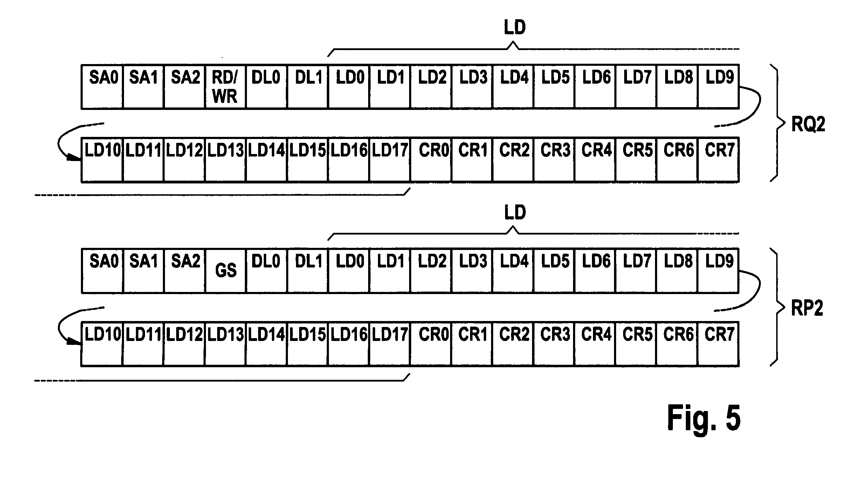

In der Fig. 5 ist ein Beispiel für einen Anfragedatenrahmen RQ2 und einen entsprechenden Antwortdatenrahmen RP2 mit 32 Bit Länge dargestellt. Die jeweiligen höchstwertigen Bitpositionen sind mit drei Adressbits SA0, SA1, SA2 belegt. Beim Anfragedatenrahmen RQ2 ist das vierthöchste Bit ein Schreiblesebit RD/WR und beim Antwortdatenrahmen RP2 ein Zustandsbit GS. Darauf folgen zwei Längenanzeigebits DL0, DL1, die beispielsweise bei einer Codierung 01 die Datenrahmenlänge zu 32 Bit anzeigen. Es sind acht niedrigstwertige Bitpositionen mit CRC-Prüfbits für die zwischen den Längenanzeigebits und den Prüfbits angeordneten Nutzdatenbits LD0-LD17 vorgesehen. Die Übertragung eines 32-Bit-Datenrahmens erfolgt in 32 Taktzyklen, die einen Chip-Select-Zyklus bilden. Der Antwortdatenrahmen RP2 wird in dem Select-Zyklus übertragen, der direkt auf den Select-Zyklus folgt, der in dem Anfragedatenrahmen RQ2 gesendet wurde.

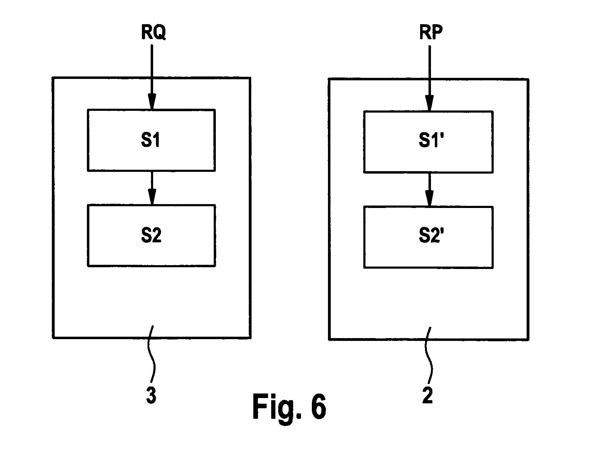

In der Fig. 6 ist schematisch dargestellt, welche Verfahrensschritte durch die Master- und Slave-Einrichtungen 2, 3 durchgeführt werden. Die entsprechenden Einrichtungen sind derart ausgeführt, dass sie dabei die vorbeschriebenen Verfahren ausführen und die Datenrahmen entsprechend erzeugen. Eine entsprechende Slave-Einrichtung 3 erhält einen Anfragedatenrahmen RQ, beispielsweise gemäß den Fig. 4 oder 5. In einem ersten Schritt S1 wird anhand der empfangenen Längenanzeigebits festgestellt, ob es sich um einen 16-Bit-Datenrahmen oder einen längeren Datenrahmen handelt. Alle Datenrahmen, die länger als 16 Bit sind, werden einem 8-Bit-CRC unterzogen. Falls die Längenanzeigebits einen 16-Bit-Anfragedatenrahmen anzeigen, wird dieser nur mittels dem übertragenen Paritätsbit PAR geprüft. Anschließend, im Schritt S2, wird die Anzahl der benötigten Takte während der Selektionsphase des Sensors bzw. der Slave-Einrichtung 3 in Abhängigkeit von den Längenanzeigenbits festgestellt. Damit erfolgt eine Sicherheitsüberprüfung, ob alle Daten entsprechend der angezeigten Länge in durch die Längeanzeigebits getaktet erhalten wurden. Da die Längenanzeigebits die Anzahl der Bits des Datenrahmens der Anfrage codieren, ist dadurch auch die Anzahl der Anfragetakte festgelegt. Die Nutzdaten der Anfrage können extrahiert werden, da diese Instruktionen eine bekannte Länge aufweisen und anhand des Schreiblesebits bekannt ist, ob es sich um einen Schreib- oder Lesebefehl handelt. Die Nutzdaten der Antwort können extrahiert werden, da durch die Längenanzeigebits bekannt ist, an welcher Stelle der Datenrahmen endet bzw. wo die Nutzdaten in dem Rahmen vorliegen.

Auf der Seite der Master- Einrichtung 2 wird ebenfalls zunächst die gültige oder valide Datenrahmenlänge der Antwort anhand der Längenanzeigebits DL festgestellt und entweder eine Paritätsüberprüfung oder eine CRC-Prüfung an den Nutzdaten durchgeführt. Dies erfolgt in einem Schritt S1'. Dem Mikrocontroller bzw. der Master-Einrichtung 2 ist bekannt, welche Länge der Antwortdatenrahmen RP aufweist, da in dem vorhergegangenen Selektionszyklus ein entsprechender Befehl über die Nutzdaten von der Master- Einrichtung 2 gesendet wurde. Im Schritt S2' werden somit die Nutzdaten, beispielsweise Sensordaten, extrahiert und ausgewertet.

Die Erfindung hat insbesondere den Vorteil, dass flexibel verschiedene Datenrahmenlängen verarbeitet und übertragen werden können. Ferner können die Datenrahmen vollständig zum Datenaustausch verwendet werden. Es ist durch die zeitversetzte Anfrage- und Antwortdatenrahmen möglich, diese vollständig zu nutzen. Durch den Einsatz eines Paritätsbits oder mehrerer CRC-Prüfbits, wird die Datenübertragung ferner besonders sicher.

Obwohl die vorliegende Erfindung anhand bevorzugter Ausführungsbeispiele näher erläutert wurde, ist sie nicht darauf beschränkt, sondern vielfältig modifizierbar. Abweichend von den in Fig. 4 und 5 dargestellten Datenrahmenlängen sind weitere Datenrahmen denkbar. Auch die dort dargestellten Bitpositionen für die Adressbits, Schreib-/Lesebits, Längenanzeigebits, Statusbits und Prüfbits kann verändert werden. Ferner ist denkbar, mehrere Chip-Select-Leitungen vorzusehen, um beispielsweise den Adressraum oder die Anzahl der notwendigen Adressbits in den Datenrahmen zu reduzieren. Das vorgeschlagene Datenübertragungsverfahren ist nicht auf einen SPI-Bus beschränkt, sondern kann vielfältig bei synchronen seriellen Bussystemen eingesetzt werden.

## Patentansprüche

1. Verfahren zum Übertragen von Datenrahmen zwischen einer Master-Einrichtung (2) und einer oder mehreren Slave-Einrichtungen (3, 4, 5) über ein Bussystem (6) mit mindestens einer Anfrageleitung (16) zum Übertragen von Anfragedatenrahmen (RQ1, RQ2) von der Master-Einrichtung (2) an die Slave-Einrichtungen (3, 4, 5), einer Antwortleitung (17) zum Übertragen von Antwortdatenrahmen (RP1, RP2) von den Slave-Einrichtungen (3, 4, 5) zu der Master-Einrichtung (2) und mindestens einer Auswahlleitung (15) zum Aktivieren der Slave-Einrichtungen (3, 4, 5), wobei die Anfrage- und Antwortdatenrahmen (RQ1, RQ2, RP1, RP2) mit mindestens einem Adressbit (SA0, SA1, SA2) zum Adressieren einer der Slave-Einrichtungen (3, 4, 5), Nutzdatenbits (LD) und mindestens einem Längenanzeigebit (DL0, DL1) zum Anzeigen der Datenrahmenlänge übertragen werden, wobei die Anfragedatenrahmen (RQ1, RQ2) und die Antwortdatenrahmen (RP1, RP2) synchron miteinander übertragen werden, **dadurch gekennzeichnet, dass** auf einen Anfragedatenrahmen (RQ1) folgend ein zugehöriger Antwortdatenrahmen übertragen wird, wobei in Abhängigkeit von den Nutzdatenbits (LD) eines Anfragedatenrahmens (RQ1) von der adressierten Slave-Einrichtung (3, 4, 5) ein verlängerter Antwortdatenrahmen und ein damit synchroner um Zusatzbits (AD) verlängerter Anfragedatenrahmen (RQ1') gesendet werden können.

2. Verfahren nach Anspruch 1, wobei das Übertragen eines Anfrage- und Antwortdatenrahmens (RQ1, RQ2, RP1, RP2) durch Ändern des Pegels eines Auswahlsignals (CSB) auf der Auswahlleitung (15) gestartet wird.

3. Verfahren nach einem der vorangegangenen Ansprüche, wobei durch die Master-Einrichtung (2) das Auswahlsignal (CSB) für die Dauer der Übertragung der Anfrage- und/oder Antwortdatenrahmen (RQ1, RQ2, RP1, RP2) gesetzt wird.

4. Verfahren nach einem der vorangegangenen Ansprüche, wobei auf einen Anfragedatenrahmen (RQ1) folgend ein Antwortdatenrahmen (RP1) mit denselben Adressbits (SA0, SA1, SA2) von der adressierten Slave-Einrichtung (3, 4, 5) gesendet wird.

5. Verfahren nach einem der vorangegangenen Ansprüche, wobei die Zusatzbits Prüfbits (CRO-CR7), insbesondere für eine zyklische Redundanzprüfung, umfasst und die Längenanzeigebits (DL0, DL1) die Länge des verlängerten Anfragerahmens (RQ1') anzeigen.

6. Verfahren nach einem der vorangegangenen Ansprüche, wobei die Längenanzeigebits (DL0, DL1) eines mit einem verlängerten Anfragedatenrahmen (RQ1') synchron gesendeten Antwortdatenrahmens (RP) die unveränderte Länge des Antwortdatenrahmens anzeigen.

7. Verfahren nach einem der vorangegangenen Ansprüche, wobei in Abhängigkeit von den Längenanzeigebits (DL0, DL1) ein jeweiliger Datenrahmen ein Paritätsbit (PAR) oder Prüfbits (CRO-CR7) für eine zyklische Redundanzprüfung aufweisen.

8. Verfahren nach einem der vorangegangenen Ansprüche, wobei die Adressbits (SAO, SA1, SA2) als höchstwertige Bits eines jeweiligen Datenrahmen übertragen werden.

9. Verfahren nach einem der vorangegangenen Ansprüche, wobei ein Schreiblesebit (RD/WR) an einer vorbestimmten Bitposition in den Anfragedatenrahmen (RQ1) und ein Statusbit (GS) an derselben Bitposition in den Antwortdatenrahmen (RP) übertragen wird.

10. Verfahren nach einem der vorangegangenen Ansprüche, wobei ein Paritätsbit (PAR) insbesondere als niedrigstwertigstes Bit in den Anfragedatenrahmen (RQ1, RQ2) und/oder den Antwortdatenrahmen (RP1, RP2) übertragen wird.

11. Verfahren nach einem der vorangegangenen Ansprüche, wobei die Bitpositionen der Adressbits (SAO, SA1, SA2), der Nutzdatenbits (LD), der Längenanzeigebits (DL0, DL1), der Schreiblesebits (RW/WR), der Statusbits (GS), der Paritätsbits (PAR) und/oder der Prüfbits (CRO-CR7) für alle Datenrahmen gleich festgelegt werden.

12. Verfahren nach einem der vorangegangenen Ansprüche, wobei die Anfrage- und Antwortdatenrahmen (RQ1, RP) 16 Bit, 32 Bit, 48 Bit oder 64 Bit umfassen.

13. Computerprogrammprodukt, **dadurch gekennzeichnet, dass** es die Durchführung eines Verfahrens nach einem der Ansprüche 1-12 auf einer oder mehreren programmgesteuerten Master- und/oder Slave-Einrichtungen (2, 3, 4, 5) veranlasst.

14. Kommunikationsnetzwerk (1) mit mindestens einer Master-Einrichtung (2) und einer oder mehreren Slave-Einrichtungen (3, 4, 5), welche an ein Bussystem (6) gekoppelt sind, **dadurch gekennzeichnet, dass** die Master- und Slave-Einrichtungen (2, 3, 4, 5) derart ausgestaltet sind, dass ein Verfahren nach einem der Ansprüche 1-12 durchgeführt wird.

15. Kommunikationsnetzwerk (1) nach Anspruch 14, wobei das Bussystem (6) ein getaktetes Bussystem ist, und insbesondere die Master-Einrichtung (2) über eine Taktleitung (18) ein Taktsignal (SCLK) an die Slave-Einrichtungen (3, 4, 5) liefert.

16. Kommunikationsnetzwerk (1) nach Anspruch 14 oder 15, wobei das Bussystem (6) als ein SPI-Bus ausgeführt ist.

## Claims

1. Method for transmitting data frames between a master device (2) and one or more slave devices (3, 4, 5) via a bus system (6) having at least one query line (16) for transmitting query data frames (RQ1, RQ2) from the master device (2) to the slave devices (3, 4, 5), a response line (17) for transmitting response data frames (RP1, RP2) from the slave devices (3, 4, 5) to the master device (2) and at least one selection line (15) for activating the slave devices (3, 4, 5), the query and response data frames (RQ1, RQ2, RP1, RP2) being transmitted with at least one address bit (SAO, SA1, SA2) for addressing one of the slave devices (3, 4, 5), useful data bits (LD) and at least one length indication bit (DL0, DL1) for indicating the data frame length, the query data frames (RQ1, RQ2) and the response data frames (RP1, RP2) being transmitted in synchronism with one another, **characterized in that** an associated response data frame is transmitted following a query data frame (RQ1), an extended response data frame and a query data frame (RQ1') which is synchronous with the latter and has been extended by additional bits (AD) being able to be transmitted by the addressed slave device (3, 4, 5) on the basis of the useful data bits (LD) in a query data frame (RQ1).

2. Method according to Claim 1, the transmission of a query data frame and a response data frame (RQ1, RQ2, RP1, RP2) being started by changing the level of a selection signal (CSB) on the selection line (15).

3. Method according to one of the preceding claims, the master device (2) setting the selection signal (CSB) for the duration of the transmission of the query and/or response data frames (RQ1, RQ2, RP1, RP2).

4. Method according to one of the preceding claims, the addressed slave device (3, 4, 5) transmitting a response data frame (RP1) with the same address bits (SA0, SA1, SA2) following a query data frame (RQ1).

5. Method according to one of the preceding claims, the additional bits comprising check bits (CRO-CR7), in particular for a cyclic redundancy check, and the length indication bits (DL0, DL1) indicating the length of the extended query frame (RQ1').

6. Method according to one of the preceding claims, the length indication bits (DL0, DL1) of a response data frame (RP) transmitted in synchronism with an extended query data frame (RQ1') indicating the unchanged length of the response data frame.

7. Method according to one of the preceding claims, a respective data frame having a parity bit (PAR) or check bits (CRO-CR7) for a cyclic redundancy check on the basis of the length indication bits (DL0, DL1).

8. Method according to one of the preceding claims, the address bits (SAO, SA1, SA2) being transmitted as most significant bits in a respective data frame.

9. Method according to one of the preceding claims, a read/write bit (RD/WR) being transmitted at a predetermined bit position in the query data frames (RQ1) and a status bit (GS) being transmitted at the same bit position in the response data frames (RP).

10. Method according to one of the preceding claims, a parity bit (PAR) being transmitted, in particular, as the least significant bit in the query data frames (RQ1, RQ2) and/or the response data frames (RP1, RP2).

11. Method according to one of the preceding claims, the bit positions of the address bits (SAO, SA1, SA2), the useful data bits (LD), the length indication bits (DL0, DL1), the read/write bits (RD/WR), the status bits (GS), the parity bits (PAR) and/or the check bits (CRO-CR7) being defined to be the same for all data frames.

12. Method according to one of the preceding claims, the query and response data frames (RQ1, RP) comprising 16 bits, 32 bits, 48 bits or 64 bits.

13. Computer program product, **characterized in that** it causes a method according to one of Claims 1-12 to be carried out in one or more program-controlled master and/or slave devices (2, 3, 4, 5).

14. Communication network (1) having at least one master device (2) and one or more slave devices (3, 4, 5) which are coupled to a bus system (6), **characterized in that** the master and slave devices (2, 3, 4, 5) are configured in such a manner that a method according to one of Claims 1-12 is carried out.

15. Communication network (1) according to Claim 14, the bus system (6) being a clocked bus system, and the master device (2), in particular, providing the slave devices (3, 4, 5) with a clock signal (SCLK) via a clock line (18).

16. Communication network (1) according to Claim 14 or 15, the bus system (6) being in the form of an SPI bus.

## Revendications

1. Procédé pour transmettre des trames de données entre un dispositif maître (2) et un ou plusieurs dispositifs esclaves (3, 4, 5) par l'intermédiaire d'un système de bus (6) qui présente
au moins un conducteur d'interrogation (16) qui transmet des trames de données d'interrogation (RQ1, RQ2) du dispositif maître (2) aux dispositifs esclaves (3, 4, 5), un conducteur de réponse (17) qui transmet des trames de données de réponse (RP1, RP2) des dispositifs esclaves (3, 4, 5) au dispositif maître (2) et au moins un conducteur de sélection (15) qui active les dispositifs esclaves (3, 4, 5),
les trames de données d'interrogation et les trames de données de réponse (RQ1, RQ2, RP1, RP2) étant transmises avec au moins un bit d'adresse (SAO, SA1, SA2) qui adresse l'un des dispositifs esclaves (3, 4, 5), des bits (LD) de données utiles et au moins un bit (DL0, DL1) d'indication de longueur qui indique la longueur de la trame de données,
les trames de données d'interrogation (RQ1, RQ2) et les trames de données de réponse (RP1, RP2) étant transmises de manière synchronisée les unes avec les autres,
**caractérisé en ce**
**qu'**une trame associée de données de réponse est transmise à la suite d'une trame de données d'interrogation (RQ1), une trame prolongée de données de réponse et une trame prolongée (RQ1') de données d'interrogation pouvant être envoyées par le dispositif esclave (3, 4, 5) adressé de manière synchronisée avec des bits supplémentaires (AD) en fonction du bit (LD) de données utiles d'une trame (RQ1) de données d'interrogation.

2. Procédé selon la revendication 1, dans lequel la transmission d'une trame de données d'interrogation et d'une trame de données de réponse (RQ1, RQ2, RP1, RP2) est lancée par modification du niveau d'un signal de sélection (CSB) sur le conducteur de sélection (15).

3. Procédé selon l'une des revendications précédentes, dans lequel le signal de sélection (CSB) est appliqué par le dispositif maître (2) pendant la durée de la transmission des trames de données d'interrogation et/ou des trames de données de réponse (RQ1, RQ2, RP1, RP2).

4. Procédé selon l'une des revendications précédentes, dans lequel une trame (RP1) de données de réponse est envoyée par le dispositif esclave (3, 4, 5) adressé à la suite d'une trame (RQ1) de données d'interrogation avec le même bit d'adresse (SA0, SA1, SA2).

5. Procédé selon l'une des revendications précédentes, dans lequel les bits supplémentaires comprennent des bits de vérification (CRO-CR7), en particulier en vue d'une vérification de redondance cyclique, et en ce que les bits (DL0, DL1) d'indication de longueur indiquent la longueur de la trame prolongée (RQ1') d'interrogation.

6. Procédé selon l'une des revendications précédentes, dans lequel les bits (DL0, DL1) d'indication de longueur d'une trame (RP) de données de réponse envoyés de manière synchronisée sur une trame (RQ1') prolongée de données d'interrogation indiquent la longueur inchangée de la trame de données de réponse.

7. Procédé selon l'une des revendications précédentes, dans lequel chaque trame de données présente un bit de parité (PAR) ou des bits de vérification (CRO-CR7) en vue d'une vérification cyclique de redondance en fonction du bit (DL0, DL1) d'indication de longueur.

8. Procédé selon l'une des revendications précédentes, dans lequel les bits d'adresse (SAO, SA1, SA2) sont transmis comme bits de plus haute valeur de chaque trame de données.

9. Procédé selon l'une des revendications précédentes, dans lequel un bit de lecture/écriture (RD/WR) est transmis en une position prédéterminée dans la trame (RQ1) de données d'interrogation et un bit d'état (GS) est transmis dans la même position de la trame (RP) de données de réponse.

10. Procédé selon l'une des revendications précédentes, dans lequel un bit de parité (PAR) est transmis en particulier comme bit de plus basse valeur dans la trame (RQ1, RQ2) de données d'interrogation et/ou dans la trame (RP1, RP2) de données de réponse.

11. Procédé selon l'une des revendications précédentes, dans lequel les positions des bits d'adresse (SAO, SA1, SA2), des bits de données utiles (LD), des bits (DL0, DL1) d'indication de longueur, des bits de lecture/écriture (RD/WR), des bits d'état (GS), des bits de parité (PAR) et/ou des bits de vérification (CRO-CR7) sont définis comme identiques pour toutes les trames de données.

12. Procédé selon l'une des revendications précédentes, dans lequel les trames de données d'interrogation et les trames de données de réponse (RQ1, RP) comprennent 16 bits, 32 bits, 48 bits ou 64 bits.

13. Produit de programme informatique, **caractérisé en ce qu'**il permet d'exécuter un procédé selon l'une des revendications 1 à 12 sur un ou plusieurs dispositifs maîtres et/ou esclaves (2, 3, 4, 5) commandés par programme.

14. Réseau de communication (1) qui présente au moins un dispositif maître (2) et un ou plusieurs dispositifs esclaves (3, 4, 5) raccordés à un système de bus (6), **caractérisé en ce que** les dispositifs maîtres et les dispositifs esclaves (2, 3, 4, 5) sont configurés de manière à exécuter un procédé selon l'une des revendications 1 à 12.

15. Réseau de communication (1) selon la revendication 14, dans lequel le système de bus (6) est un système de bus cadencé et dans lequel en particulier le dispositif maître (2) délivre sur un conducteur de cadençage (18) un signal de cadençage (SCLK) aux dispositifs esclaves (3, 4, 5).

16. Réseau de communication (1) selon la revendication 14 ou 15, dans lequel le système de bus (6) est configuré comme bus SPI.
